# EUROPÄISCHE PATENTSCHRIFT

(11) **EP 0 694 712 B1**
(45) Veröffentlichungstag und Bekanntmachung des Hinweises auf die Patenterteilung: **21.05.1997**
(21) Anmeldenummer: 94111941.4
(22) Anmeldetag: 30.07.1994
(51) Int. Cl.: F16H 55/08, F16H 55/17, F16H 1/28

(54) **Hohlrad für Planeten-Zahnradgetriebe**
Ring gear for planetary gearset
Couronne pour train épicycloidal

(43) Veröffentlichungstag der Anmeldung: 31.01.1996
(73) Patentinhaber: ERNST GROB AG, CH-8708 Männedorf (CH)
(72) Erfinder: Dériaz, Marc, CH-8706 Meilen (CH)
(74) Vertreter: Kemény AG Patentanwaltbüro

(56) Entgegenhaltungen:
- EP-A- 0 416 949
- WO-A-88/02081
- US-A- 3 015 973
- US-A- 3 890 853
- IBM TECHNICAL DISCLOSURE BULLETIN, Bd.11, Nr.5, Oktober 1968, NEW YORK US Seite 529 J.A.MACHMER 'jAM PROOF GEARING'
- VDI ZEITSCHRIFT, Bd.103, Nr.36, 21. Dezember 1961 Seite 1809 M. EBERT 'Ovalradzähler mit sonderverzahnten Ovalrädern'

## Beschreibung

Die vorliegende Erfindung betrifft ein Hohlrad für ein Planeten-Zahnradgetriebe mit einem Sonnenrad, einem Hohlrad und mindestens einem Planetenrad.

Um grosse Übersetzungsverhältnisse von drehenden Wellen auf kleinstem Raum zu realisieren, wird herkömmlicherweise häufig ein Planetengetriebe eingesetzt. Dabei werden normalerweise ein Sonnerad, drei Planetenräder und ein Hohlrad achsparallel miteinander in Eingriff gebracht. Das Sonnenrad und die Planetenräder sind dabei herkömmliche Zahnräder mit Aussenverzahnung, während das Hohlrad eine Innenverzahnung aufweist.

Gerade die Herstellung von Hohlrädern mit Innenverzahnung bietet einige Probleme. Sollen solche Hohlräder in sehr grossen Stückzahlen hergestellt werden, so sind normalerweise die herkömmlichen spanabhebenden Verfahren wie Räumen oder Stossen zu kostenintensiv und auch zu langsam. Wenn aber gleichzeitig hohe Präzision und Festigkeit bei möglichst geringem Gewicht gefordert sind, so fallen auch Guss- oder Spritzverfahren ausser Betracht. Als spanlose Bearbeitung bietet sich hingegen das Walzen und Drücken an. Aber diese Verfahren stossen hinsichtlich der Präzision der Verzahnungsausbildung von Hohlrädern ebenfalls an ihre Grenzen.

So ist beispielsweise in US 3.015,973 ein Planeten-Zahnradgetriebe dargestellt, bei welchem das Ueberdeckungsverhältnis der Verzahnung zwischen dem Hohlrad und den Planetenrädern etwa gleich gross wie das Ueberdeckungsverhältnis der Verzahnung zwischen dem Sonnenrad und den Planetenrädern ist.

Die Aufgabe der vorliegenden Erfindung lag nun darin, ein Hohlrad für ein Planetengetriebe zu finden, welches sich insbesondere dazu eignet, mittels spanlosen Verfahren mit hoher Präzision hergestellt zu werden.

Diese Aufgabe wird erfindungsgemäss durch den kennzeichnenden Teil von Anspruch 1 gelöst. Bevorzugte Ausführungsformen der Erfindung ergeben sich aus den weiteren Ansprüchen 2 bis 4.

Erfindungsgemäss soll die Breite der Zahnlücken der Innenverzahnung des Hohlrades derart bemessen sein, dass jeweils nur jeder zweite Zahn des Planetenrades mit einem Zahn des Hohlrades in Eingriff gelangt, d.h. dass das Überdeckungsverhältnis der Verzahnung zwischen dem Hohlrad und den Planetenrädern grösser als das Ueberdeckungsverhältnis zwischen Sonnenrad und den Planetenrädern ist. Es hat sich überraschenderweise gezeigt, dass es bei dieser erfindungsgemässen Auslegung der Verzahnung des Hohlrades, d.h durch eine Vergrösserung der Breite der Zahnlücke im Verhältnis zur Zahnbreite selbst, nicht zu einer Beeinträchtigung in der Übersetzung, Kraftübertragung oder Zuverlässigkeit des Getriebes kommt. Der Vorteil bei einer solchen erfindungsgemässen Verzahnung liegt nun darin, dass die Breite der Zahnlücken zwischen den Zähnen gegenüber einer herkömmlichen Verzahnung vorzugsweise etwa verdreifacht ist. Damit lässt sich die Verzahnung insbesondere mit spanlosen Herstellungsverfahren, vorzugsweise dem Schlagwalzen, einfach und vor allem auch mit hoher Präzision realisieren.

Ein Ausführungsbeispiel der Erfindung wird nachstehend anhand von Zeichnungen noch näher erläutert. Es zeigen
Fig. 1 den schematischen Querschnitt durch ein herkömmliches Planetengetriebe;
Fig. 2 schematisch eine erfindungsgemässe Verzahnung des Hohlrades eines Planetengetriebes.

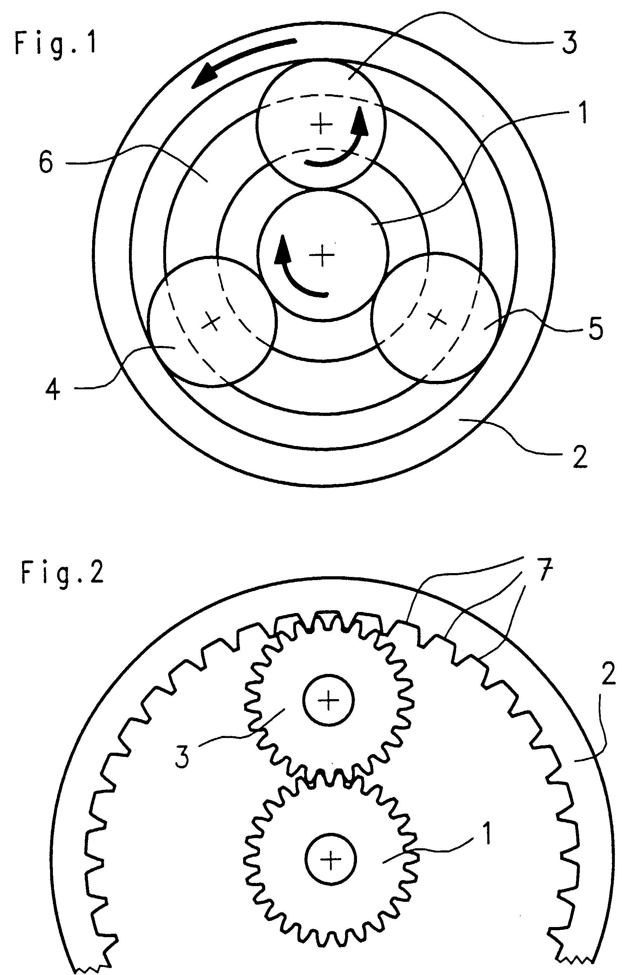

In Figur 1 ist schematisch der Aufbau eines Planetengetriebes mit Sonnenrad 1, Hohlrad 2 und beispielsweise drei Planetenrädern 3,4,5 dargestellt. Am festen oder drehbaren Planetenradträger 6 sind die Planetenräder 3,4,5 durch eine drehbare Lagerung verbunden. Die Verzahnung der Zahnräder 1,2,3,4,5 ist in dieser schematischen Darstellung nicht gezeigt. Herkömmlicherweise weisen aber sowohl das Sonnenrad 1 und die Planetenräder 3,4,5 eine Aussenverzahnung wie auch das Hohlrad 2 eine Innenverzahnung mit im wesentlichen identischen Zahnbreiten und - lücken auf.

Wie schon aus dieser Figur 1 ersichtlich, ist die Ueberdeckung der Verzahnung zwischen Hohlrad 2 und Planetenrädern 3,4,5 grösser als die Ueberdeckung zwischen den Planetenrädern 3,4,5 und dem Sonnenrad 1. Das heisst, das normalerweise zwischen Hohlrad 2 und den Planetenrädern 3,4,5 gleichzeitig mehrere Zähne der Verzahnungen miteinander im Eingriff stehen, während zwischen den Planetenrädern 3,4,5 und dem Sonnenrad 1 jeweils mindestens ein Zahnpaar im Eingriff steht.

Es wird nun erfindungsgemäss vorgeschlagen, beim Hohlrad 2 vorzugsweise jeden zweiten Zahn einer herkömmlichen Verzahnung wegzulassen, wie aus Figur 2 ersichtlich. Dabei muss die herkömmliche Zahnanzahl des Hohlrades 2 gerade sein, um eine gleichmässige Verteilung der Zahnlücken 7 in der Hohlradverzahnung zu erreichen. Die Breite der Zahnlücken 7 ist dadurch gegenüber der herkömmlichen Zahnlückenbreite etwa verdreifacht. Durch die Wahl des Überdeckungsverhältnisses zwischen der Verzahnung des Hohlrades 2 und dem Planetenrad 3 in derselben Grössenordnung wie das Überdeckungsverhältnis zwischen Sonnenrad 1 und Planetenrad 3, welches normalerweise ca. 1 oder leicht grösser gewählt wird, wird erreicht, dass trotz den Zahnlücken 7 immer wenigstens ein Zahnpaar im Eingriff steht, d.h. die effektive Ueberdeckung grösser oder gleich 1 ist. Somit wird betreffend des Betriebsverhaltens der Verzahnung kein Nachteil in Kauf genommen. Da die Verzahnung auf die Kraftübertragung zwischen Sonnenrad 1 und Planetenrad 3 ausgelegt werden muss, welche gleich gross ist, wie an der Verzahnung zwischen Planetenrad 3 und Hohlrad 2, wird auch hinsichtlich der Belastbarkeit der Verzahnung keine Verschlechterung erzielt.

Der Vorteil dieser im Verhältnis zur Zahnbreite vergrössertern Zahnlücke 7 beim Hohlrad 2 liegt darin, dass die Herstellung der Verzahnung des Hohlrades 2 insbesondere durch spanlose Verfahren wie Drücken und Walzen nun vereinfacht ist, resp. dadurch erst sowohl eine hohe Präzision wie auch eine genügende Festigkeit erreicht werden kann. Es ist leicht ersichtlich, dass ein solches Hohlrad 2 auch einfacher durch spanabhebende Verfahren wie beispielsweise Räumen hergestellt werden kann, indem die Spanabfuhr durch mehr Raum verbessert ist.

Das Problem bei der Herstellung herkömmlicher Verzahnungen durch Kaltumformverfahren lag unter anderem darin, dass die im Inneren des Hohlradrohlings zu verwendende Matrize exakt in Verzahnungsform hergestellt sein musste. Wenn nun diese Matrize, wie es bei der erfindungsgemässen Verzahnung vorgesehen ist, für breitere Zahnlücken 7 ausgelegt werden kann, so kann diese die Walz- resp. Drückkräfte besser aufnehmen, weil die entsprechenden Matrizenzähne in dieser Breite ausgeführt werden können und dementsprechend stabiler sind.

In Figur 2 ist ein Getriebe mit nur einem Planetenrad 3 dargestellt. Selbstverständlich kann die erfindungsgemässe Verzahnung des Hohlrades 2 auch beim Einsatz von drei oder mehreren Planetenrädern im Getriebe verwendet werden.

## Patentansprüche

1. Hohlrad für ein Planeten-Zahnradgetriebe mit einem Sonnenrad (1), einem Hohlrad (2) und mindestens einem Planetenrad (3;4;5), wobei das Ueberdeckungsverhältnis der Verzahnung zwischen dem Hohlrad (2) und dem oder den Planetenrädern (3;4;5) wenigstens gleich gross als das Ueberdeckungsverhältnis der Verzahnung zwischen dem Sonnenrad (1) und dem oder den Planeternrädern (3;4;5) gewählt ist, dadurch gekennzeichnet, dass die Breite der Zahnlücken (7) der Innenverzahnung des Hohlrades (2) derart bemessen sind, dass jeweils nur jeder zweite Zahn des Planetenrades (3;4;5) mit einem Zahn des Hohlrades (2) in Eingriff gelangt.

2. Hohlrad nach Anspruch 1, dadurch gekennzeichnet, dass die Breite der Zahnlücken (7) des Hohlrades (2) der dreifachen Zahnlückenbreite des oder der Planetenräder (3;4;5) entspricht.

3. Hohlrad nach einem der Ansprüche 1 bis 2, dadurch gekennzeichnet, dass die Zahnformen und Zahnabstände des Hohlrades (2) einer herkömmlichen Zahngeometrie entsprechen, bei welcher jeder zweite Zahn weggelassen ist.

4. Hohlrad nach einem der Ansprüche 1 bis 3, dadurch gekennzeichnet, dass die Verzahnung des Hohlrades (2) spanlos durch Kaltumformung, insbesondere Schlagwalzen, hergestellt ist.

## Claims

1. Ring gear for a planetary gearing comprising a sun gear (1), a ring gear (2) and at least one planet pinion (3;4;5), whereby the overlapping ratio of the toothing between the ring gear (2) and the planet pinion(s) (3;4;5) is choosen of at least the same amount as the overlapping ratio of the toothing between the sun gear (1) and the planet pinion(s) (3;4;5), characterised in that the width of the toothing gap (7) of the inner toothing of the ring gear (2) is dimensioned in such a manner that only every other tooth of the planet pinion (3;4;5) is engaged with a tooth of the ring gear (2).

2. Ring gear according claim 1, characterised in that the width of the toothing gap (7) of the ring gear (2) corresponds to the triple of the toothing gaps of the planet pinions (3;4;5).

3. Ring gear according to one of claims 1 to 2, characterised in that the toothing shape and the tooth distances of the ring gear (2) corresponds to a conventional toothing geometry in which each second tooth has been left out.

4. Ring gear according to one of claims 1 to 3, characterised in that the toothing of the ring gear (2) is manufactured by chipless methods by cold forming, particularly by impact rolling.

## Revendications

1. Couronne de train planétaire pour un engrenage planétaire comprenant une roue solaire (1), une couronne de train planétaire (2) et au moins un pignon satellite (3;4;5), dont le facteur de recouvrement de la denture entre la couronne de train planétaire (2) et le ou les pignons planétaires (3;4;5) est choisi pour avoir au moins la même grandeur que le facteur de recouvrement de la denture entre la roue solaire (1) et le ou les pignons planétaires (3;4;5), caracterisée en ce que la largeur de l'entredent de la denture interieure de la couronne de train planétaire (2) est dimensionée de telle manière que seule chaque seconde dent du pignon planétaire (3;4,5) est engrenée avec une dent de la couronne de train planétaire (2).

2. Couronne de train planétaire selon la revendication 1, caracterisé en ce que la largeur des entredents (7) de la couronne de train planétaire (2) est égale au triple de la largeur de l'entredent des pignons planétaires (3;4;5).

3. Couronne de train planétaire selon une des revendications 1 à 2, caracterisé en ce que la forme de la denture et la distance des dents de la couronne de train planétaire (2) correspondent à une géométrie conventionelle, dont chaque seconde dent à été supprimée.

4. Couronne de train planétaire selon une des revendications 1 à 3, caracterisé en ce que la denture de la couronne de train planétaire (2) est fabriquée par formage à froid sans enlèvement de copeaux, particulièrement avec le roulage par martelage.
